# FASCICULE DE BREVET EUROPEEN

(11) **EP 4 143 421 B1**
(45) Date de publication et mention de la délivrance du brevet: **31.12.2025**
(21) Numéro de dépôt: 21732391.4
(22) Date de dépôt: 22.04.2021
(51) Int. Cl.: F01D 9/04, F01D 25/16, F01D 11/00

(54) **CARTER INTERMEDIAIRE DE REDRESSEMENT AVEC BRAS STRUCTURAL MONOBLOC**
GLEICHRICHTER-ZWISCHENGEHÄUSE MIT ARM AUS MONOBLOCK-STRUKTUR
INTERMEDIATE RECTIFIER CASING WITH MONOBLOC STRUCTURAL ARM

(30) Priorité: 29.04.2020 FR 2004258
(43) Date de publication de la demande: 08.03.2023
(73) Titulaire: SAFRAN AIRCRAFT ENGINES, 75015 Paris (FR)
(72) Inventeur: GOUPIL, Frédéric Jacques Eugène, 77550 MOISSY-CRAMAYEL (FR); MARLIN, François Marie Paul, 77550 MOISSY-CRAMAYEL (FR); ORIEUX, Kaëlig Merwen, 77550 MOISSY-CRAMAYEL (FR); VERSEUX, Philippe, 77550 MOISSY-CRAMAYEL (FR); CHERAGA, Yacine, 77550 MOISSY-CRAMAYEL (FR)
(74) Mandataire: Gevers & Orès
(86) Numéro de dépôt international: PCT/FR2021/050695
(87) Numéro de publication internationale: WO 2021/219949

(56) Documents cités:
- EP-A1- 3 450 685
- SE-C2- 528 183
- US-B2- 10 458 247

## Description

### Domaine de l'invention

L'invention concerne le domaine général des turbomachines double-flux pour aéronef. Elle vise en particulier un carter fixe de turbomachine comprenant une rangée annulaire d'aubes fixes et une rangée annulaire de bras structuraux.

### Arrière-plan technique

L'art antérieur comprend les documents SE-C2-528183C2, US-B2-10458247 et EP-A1-3450685.

Une turbomachine double flux, notamment d'aéronef, qui s'étend suivant un axe longitudinal, comprend une soufflante mobile agencée en amont d'au moins un compresseur, suivant le sens d'écoulement des gaz dans la turbomachine. Le flux d'air qui traverse la soufflante carénée est divisé en un flux primaire qui circule dans une veine primaire où est logé au moins en partie le compresseur et un flux secondaire qui circule dans une veine secondaire autour du compresseur. Ces veines primaire et secondaire sont séparées par un carter inter-veine annulaire qui porte un bec de séparation annulaire séparant les veines.

La veine primaire est formée au moins en partie, par un carter d'entrée qui est situé en amont du compresseur et qui porte le bec de séparation, un carter de compresseur basse pression, un carter de compresseur haute pression et un carter intermédiaire qui est situé en aval du carter de compresseur basse pression et en amont du carter de compresseur haute pression. Le carter d'entrée et le carter intermédiaire sont des carters structuraux qui permettent la transmission des efforts. Le carter intermédiaire comprend des bras structuraux qui s'étendent radialement à travers le flux primaire et qui sont configurés de manière à permettre le passage de servitudes. Le carter d'entrée comprend en outre une rangée annulaire d'aubes fixes connues sous l'acronyme anglais IGV pour « Inlet Guide Vane ».

Le compresseur comprend typiquement un ou plusieurs étages qui compren(nent)d chacun une rangée annulaire d'aubes redresseur montées respectivement en amont d'une rangée annulaire d'aubes mobiles. Typiquement, il peut y avoir jusqu'à cinq rangées annulaires d'aubes redresseurs. Chaque rangée annulaire d'aubes redresseurs (ou de stator) est portée par le carter de compresseur et chaque rangée annulaire d'aubes mobiles est montée sur un disque ou tambour centré sur l'axe longitudinal de la turbomachine. Le cinquième étage se trouve généralement en amont d'une portion du moyeu de la turbomachine qui présente une forme en « col de cygne ».

Les carters structuraux portant des bras structuraux et le compresseur basse pression avec ces nombreux étages allongent la turbomachine suivant l'axe longitudinal et impacte par conséquent de manière négative la masse de la turbomachine.

### Résumé de l'invention

L'objectif de la présente invention est de fournir une solution permettant de réduire la taille de la turbomachine tout en maintenant les performances de la turbomachine.

Nous parvenons à cet objectif conformément à l'invention grâce à un carter intermédiaire annulaire de turbomachine d'axe longitudinal X, en particulier pour un aéronef, dans lequel est destiné à circuler au moins en partie un flux d'air aérodynamique, le carter intermédiaire comprenant :
- une virole radialement interne annulaire,
- une virole radialement externe annulaire,
- au moins une aube de stator s'étendant sensiblement suivant un axe radial Z, l'aube de stator comprenant une pale avec un bord d'attaque et un bord de fuite, et
- au moins un organe aérodynamique qui est formé d'un bras structural s'étendant radialement au moins en partie entre la virole radialement interne et la virole radialement externe,

l'aube de stator s'étendant entre une première plateforme et une deuxième plateforme et l'organe aérodynamique comprenant un bord d'attaque qui est aligné avec le bord d'attaque de l'aube de stator dans un plan perpendiculaire à l'axe longitudinal X, le bord d'attaque de l'organe aérodynamique étant porté par une portion profilée agencée en amont du bras structural suivant le sens de circulation du flux d'air aérodynamique, la portion profilée et le bras structural étant monobloc, et
l'organe aérodynamique étant monobloc avec la virole radialement interne et la virole radialement externe, le carter intermédiaire comprenant au moins deux organes aérodynamiques espacés suivant la direction circonférentielle autour de l'axe longitudinal et un ensemble de redressement qui est rapporté entre les deux organes aérodynamiques et qui est distinct des deux organes aérodynamique, l'ensemble de redressement comprenant la première plateforme, la deuxième plateforme et une pluralité d'aubes de stator s'étendant radialement entre les première et deuxième plateformes et étant réparties régulièrement suivant la direction circonférentielle, chaque bord d'attaque de la pluralité d'aubes de stator est aligné avec le bord d'attaque de l'organe aérodynamique dans le plan perpendiculaire à l'axe longitudinal.

Ainsi, cette solution permet d'atteindre l'objectif susmentionné. En particulier, cette solution permet de réduire la taille de la turbomachine, notamment au niveau de sa longueur suivant l'axe longitudinal. Ce gain axial peut atteindre au moins 30 mm ce qui est non négligeable dans une turbomachine et vis-à-vis de la masse de la turbomachine. Par ailleurs, la réalisation de l'organe aérodynamique d'un seul tenant lui-même d'une part, et avec les viroles du carter intermédiaire d'autre part, favorise le gain de masse de la turbomachine et le temps de montage et de démontage de l'ensemble. La soufflante se décale également d'au moins 30 mm dans le cas d'une turbomachine double flux. A cela s'ajoute le fait que le montage et le démontage d'un tel carter intermédiaire sont facilités.

Le carter comprend également l'une ou plusieurs des caractéristiques suivantes, prises seules ou en combinaison :
- la portion profilée s'étend radialement entre une plateforme radialement interne et une plateforme radialement externe, les plateformes radialement interne et radialement externe étant respectivement monobloc avec la virole radialement interne et la virole radialement externe, et en ce que la plateforme radialement interne présente une surface radialement interne portant une première couche de matériau abradable.
- la première plateforme et la deuxième plateforme sont rapportées et fixées respectivement sur la virole radialement interne et la virole radialement externe, la première plateforme présentant une surface radialement interne portant une deuxième couche de matériau abradable, la deuxième couche de matériau abradable étant alignée suivant la direction circonférentielle avec la première couche de matériau abradable.
- la première plateforme comprend une embase qui est fixée sur une portée annulaire de la virole radialement interne avec au moins un organe de fixation réalisant une fixation axiale.
- la deuxième plateforme est fixée sur une paroi radiale de la virole radialement externe qui s'étend radialement vers l'extérieur depuis une surface radialement externe et via au moins un organe de fixation.
- la deuxième plateforme présente des pattes qui s'étendent chacune depuis sa surface radialement externe, chaque patte étant fixée sur une jambe axiale de la paroi radiale avec les organes de fixation réalisant une fixation radiale.
- la deuxième plateforme comprend une bride fixation radiale s'étendant radialement vers l'extérieur depuis sa surface radialement externe et suivant la direction circonférentielle sur toute sa périphérie, la bride de fixation radiale étant fixée sur une branche inférieure de la paroi radiale qui s'étend suivant l'axe radial et avec les organes de fixation réalisant une fixation axiale.
- l'ensemble de redressement est monobloc.
- le bord d'attaque de l'organe aérodynamique est situé à une distance axiale d'une zone d'intersection entre la portion profilée et le bras structural, et en ce que la zone d'intersection présente une épaisseur suivant la direction circonférentielle sensiblement égale à trois fois le maître couple de la portion profilée.
- l'aube de stator présente une corde axiale mesurée entre le bord d'attaque et le bord de fuite et en ce que la portion profilée présente une longueur axiale mesurée entre le bord d'attaque de l'organe aérodynamique et la zone d'intersection sensiblement égale à la corde axiale.
- l'axe radial est perpendiculaire à l'axe longitudinal.
- le carter intermédiaire est réalisé par fonderie ou fabrication additive.
- la paroi radiale du carter intermédiaire présente une forme en T avec une branche inférieure, une branche supérieure et une jambe axiale.
- la virole radialement interne et radialement externe sont concentriques.
- le carter intermédiaire comprend six organes aérodynamiques.
- le carter intermédiaire est agencé axialement en aval d'un carter de compresseur de la turbomachine, en particulier d'un carter de compresseur basse pression.
- le compresseur comprend un carter de compresseur et des aubes de compresseur qui s'étendent sensiblement radialement dans le carter de compresseur, à travers un flux primaire, et depuis un tambour centré sur l'axe longitudinal, le carter du compresseur étant réalisé dans un matériau composite, les aubes de compresseur et le tambour étant réalisés dans un matériau métallique.
- les aubes mobiles du compresseur sont soudées au tambour centré sur l'axe longitudinal.
- le carter intermédiaire est un carter inter-compresseur.

Selon un aspect ne faisant pas partie de l'invention, un carter intermédiaire annulaire de turbomachine d'axe longitudinal X, en particulier pour un aéronef, dans lequel est destiné à circuler au moins en partie un flux d'air aérodynamique, comprend :
- une virole radialement interne annulaire,
- une virole radialement externe annulaire,
- au moins une aube de stator s'étendant sensiblement suivant un axe radial Z entre une première plateforme et une deuxième plateforme, l'aube de stator comprenant une pale avec un bord d'attaque et un bord de fuite, et
- au moins un organe aérodynamique qui est formé d'un bras structural s'étendant radialement au moins en partie entre la virole radialement interne et la virole radialement externe,

l'organe aérodynamique comprenant un bord d'attaque qui est aligné avec le bord d'attaque de l'aube de stator dans un plan perpendiculaire à l'axe longitudinal X, le bord d'attaque de l'organe aérodynamique étant porté par une portion profilée agencée en amont du bras structural suivant le sens de circulation du flux d'air aérodynamique, la portion profilée et le bras structural étant monobloc, et
l'organe aérodynamique étant monobloc avec la virole radialement interne et la virole radialement externe,
et en ce que le carter comprend au moins deux organes aérodynamiques espacés suivant la direction circonférentielle autour de l'axe longitudinal X et un ensemble de redressement qui est rapporté entre les deux organes aérodynamiques, l'ensemble de redressement comprenant la première plateforme, la deuxième plateforme et une pluralité d'aubes de stator s'étendant radialement entre les première et deuxième plateformes et étant réparties régulièrement suivant la direction circonférentielle, chaque bord d'attaque de la pluralité d'aubes de stator est aligné avec le bord d'attaque de l'organe aérodynamique dans le plan perpendiculaire à l'axe longitudinal X.

Une telle solution permet de réduire la taille de la turbomachine, notamment au niveau de sa longueur suivant l'axe longitudinal avec un gain axial peut atteindre au moins 30 mm ce qui est non négligeable dans une turbomachine et vis-à-vis de la masse de la turbomachine. La réalisation de l'organe aérodynamique d'un seul tenant lui-même d'une part, et avec les viroles du carter intermédiaire d'autre part, favorise le gain de masse de la turbomachine et le temps de montage et de démontage de l'ensemble. La soufflante se décale également d'au moins 30 mm dans le cas d'une turbomachine double flux. A cela s'ajoute le fait que le montage et le démontage d'un tel carter intermédiaire sont facilités. Enfin, le fait de rapporter l'ensemble comprenant les aubes de stator entre les organes aérodynamiques permet de faciliter la maintenance du carter intermédiaire et de réduire les coûts en montant et démontant uniquement l'ensemble de redresseur et pas le carter intermédiaire dans son intégralité.

L'invention concerne encore un carter intermédiaire annulaire de turbomachine d'axe longitudinal X, en particulier pour un aéronef, dans lequel est destiné à circuler au moins en partie un flux d'air aérodynamique, le carter intermédiaire comprenant :
- une virole radialement interne annulaire,
- une virole radialement externe annulaire,
- au moins une aube de stator s'étendant sensiblement suivant un axe radial Z entre une première plateforme et une deuxième plateforme, l'aube de stator comprenant une pale avec un bord d'attaque et un bord de fuite, et
- au moins un organe aérodynamique qui est formé d'un bras structural s'étendant radialement au moins en partie entre la virole radialement interne et la virole radialement externe,

l'aube de stator s'étend entre une première plateforme et une deuxième plateforme et l'organe aérodynamique comprenant un bord d'attaque qui est aligné avec le bord d'attaque de l'aube de stator dans un plan perpendiculaire à l'axe longitudinal X, le bord d'attaque de l'organe aérodynamique étant porté par une portion profilée agencée en amont du bras structural suivant le sens de circulation du flux d'air aérodynamique, la portion profilée et le bras structural étant monobloc, et
l'organe aérodynamique étant monobloc avec la virole radialement interne et la virole radialement externe,
et en ce que la première plateforme est monobloc avec la virole radialement interne et la deuxième plateforme est monobloc avec la virole radialement externe, les première et deuxième plateformes comprenant chacune respectivement une pluralités de fentes de forme complémentaire avec les pales des aubes de stator qui sont distribuées régulièrement autour de l'axe longitudinal X, chaque aube de stator comprenant une extrémité radialement interne qui est reçue dans une première fente correspondante de la première plateforme et une extrémité radialement externe qui est reçue dans une deuxième fente correspondante de la deuxième plateforme.

Une telle solution permet de réduire la taille de la turbomachine, notamment au niveau de sa longueur suivant l'axe longitudinal avec un gain axial peut atteindre au moins 30 mm ce qui est non négligeable dans une turbomachine et vis-à-vis de la masse de la turbomachine. La réalisation de l'organe aérodynamique d'un seul tenant lui-même d'une part, et avec les viroles du carter intermédiaire d'autre part, favorise le gain de masse de la turbomachine et le temps de montage et de démontage de l'ensemble. La soufflante se décale également d'au moins 30 mm dans le cas d'une turbomachine double flux. A cela s'ajoute le fait que le montage et le démontage d'un tel carter intermédiaire sont facilités. Enfin, le fait de rapporter les aubes de stator sur les première et deuxième plateformes qui sont intégrales avec les viroles du carter permettent de faciliter la maintenance du carter intermédiaire en intervenant et/ou remplaçant qu'une seule ou plusieurs aubes de stator à la fois car celles-ci sont toutes rapportées.

Selon une caractéristique de ce carter intermédiaire, chacune des extrémités radialement externe ou interne est solidaire d'une plateforme de butée reposant radialement à l'extérieur d'une première ou deuxième plateforme et l'autre de chacune des extrémités radialement interne ou externe opposée radialement est bloquée ou fixée sur la première ou deuxième plateforme.

Selon une autre caractéristique de ce carter intermédiaire, le blocage ou la fixation est réalisée par un dispositif de blocage ou une soudure.

Selon un autre aspect ne faisant pas partie de l'invention, un module de turbomachine d'axe longitudinal X dans lequel circule un flux aérodynamique, comprend au moins un compresseur entouré d'un carter de compresseur qui est monté sur le carter intermédiaire de turbomachine tel que susmentionné, le carter de compresseur comprenant une paroi de fond fixée sur la paroi radiale du carter intermédiaire.

L'invention concerne en outre une turbomachine double flux d'axe longitudinal X, en particulier pour aéronef, comprenant :
- au moins une soufflante générant un flux d'air et comprenant au moins une rangée annulaire d'aubes de soufflante portées par un moyeu d'axe longitudinal X,
- un bec de séparation, en aval de la rangée d'aubes de soufflante séparant le flux d'air en un flux primaire circulant dans une veine primaire annulaire et en un flux secondaire circulant dans une veine secondaire annulaire,
- au moins un compresseur agencé en aval d'une entrée de la veine primaire formée par un bord annulaire du bec de séparation et comprenant des rangées annulaires d'aubes mobiles et d'aubes redresseur, et
- au moins un carter intermédiaire de turbomachine présentant l'une quelconque des caractéristiques précédentes, le carter intermédiaire comprenant une pluralité d'aubes de stator réparties autour de l'axe longitudinal X de manière à redresser le flux d'air en sortie de la dernière rangée d'aubes mobiles du compresseur.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue en coupe axiale d'un exemple de turbomachine à laquelle s'applique l'invention;
[Fig. 2] La figure 2 est une vue en coupe axiale et partielle de l'avant d'une turbomachine avec un bec de séparation délimitant en partie une veine primaire et une veine secondaire selon l'invention ;
[Fig. 3] La figure 3 est une vue en perspective et sensiblement de face d'un carter intermédiaire de redressement de turbomachine selon l'invention ;
[Fig. 4] La figure 4 est une vue en perspective et sensiblement de face d'un exemple de carter intermédiaire de redressement avec des organes aérodynamiques et qui est destiné à recevoir un ensemble d'aubes de stator rapporté selon l'invention ;
[Fig. 5] La figure 5 illustre schématiquement et en coupe transversale un organe aérodynamique formé d'une portion profilée et d'un bras structural en aval de la portion profilée et une aube de stator adjacente suivant une direction circonférentielle, l'organe aérodynamique et l'aube de stator s'étendant transversalement dans une veine primaire de la turbomachine selon l'invention ;
[Fig. 6] La figure 6 est une vue en perspective et de détails d'un exemple de fixation supérieure d'un ensemble d'aubes de stator sur le carter intermédiaire selon l'invention ;
[Fig. 7] La figure 7 représente une vue en perspective et de détails d'un exemple de fixation inférieure d'un ensemble d'aubes de stator sur le carter intermédiaire selon l'invention ;
[Fig. 8] La figure 8 illustre en perspective et de face un autre mode de réalisation d'un carter intermédiaire de redressement recevant un ensemble de redressement rapporté entre deux organes aérodynamiques selon l'invention ;
[Fig. 9] La figure 9 est une vue en coupe axiale du carter intermédiaire de la figure 8 selon l'invention ;
[Fig. 10] La figure 10 représente un autre mode de réalisation d'un ensemble de redressement destiné à être rapporté sur un carter intermédiaire de turbomachine et qui comprend des aubes de stator rapportées également selon l'invention ;
[Fig. 11] La figure 11 est une vue de dessous d'un mode de réalisation de blocage des extrémités radialement interne des aubes de stator sur une plateforme carter intermédiaire de turbomachine selon l'invention ;
[Fig. 12] La figure 12 illustre un mode de réalisation de montage d'aube de stator sur des plateformes d'un carter intermédiaire de redressement de turbomachine selon l'invention ;
[Fig. 13] La figure 13 représente un autre mode de réalisation d'agencement des aubes de stator sur un carter intermédiaire de redressement de turbomachine selon l'invention; et
[Fig. 14] La figure 14 est une vue en coupe axiale du carter intermédiaire selon la figure 13.

### Description détaillée de l'invention

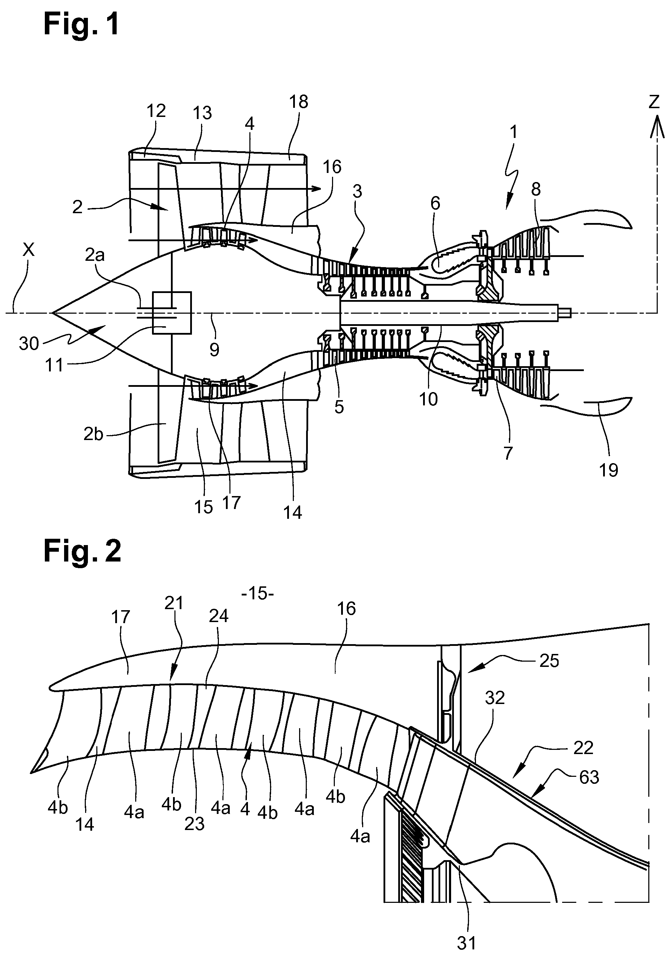

La figure 1 montre une vue en coupe axiale d'une turbomachine d'axe longitudinal X à laquelle s'applique l'invention. La turbomachine représentée est une turbomachine 1 double flux et double corps destinée à être montée sur un aéronef, tel qu'un avion. Bien entendu, l'invention n'est pas limitée à ce type de turbomachine.

Dans la présente invention, et de manière générale, les termes « amont » et « aval » sont définis par rapport à la circulation des gaz ou des flux d'air dans la turbomachine et ici suivant l'axe longitudinal X (et même de gauche à droite sur la figure 1). Les termes « axial » et « axialement » sont définis par rapport à l'axe longitudinal X. Les termes « externe », « extérieur »,« intérieur », « interne » et « radial » sont définis par rapport à un axe radial Z qui s'étend depuis l'axe longitudinal X et au regard de l'éloignement par rapport à l'axe longitudinal X. L'axe radial est perpendiculaire à l'axe longitudinal.

Cette turbomachine 1 double flux comprend de manière générale une soufflante 2 montée en amont d'un générateur de gaz 3 ou moteur (de turbine à gaz).

Le générateur de gaz 3 comprend d'amont en aval, un compresseur basse pression 4, un compresseur haute pression 5, une chambre de combustion 6, une turbine haute pression 7 et une turbine basse pression 8. Classiquement la turbomachine comprend un arbre basse pression 9 qui relie le compresseur basse pression 4 et la turbine basse pression 8 pour former un corps basse pression et un arbre haute pression 10 qui relie le compresseur haute pression 5 et la turbine haute pression 7 pour former un corps haute pression. L'arbre basse pression 9, centré sur l'axe longitudinal X, est destiné à entraîner ici un arbre de soufflante 2a. Un mécanisme de transmission de puissance 11 tel qu'un réducteur de vitesse peut être interposé entre l'arbre pression et l'arbre de soufflante 2a. La soufflante comprend des aubes de soufflante 2b portées par un moyeu d'axe longitudinal X

La soufflante 2 est entourée par un carter de soufflante 12 portée par une nacelle 13 et comprime le flux d'air qui entre dans la turbomachine 1 et qui est divisé en un flux d'air primaire traversant le générateur de gaz et en particulier dans une veine primaire 14, et en un flux d'air secondaire circulant autour du générateur de gaz 3 dans une veine secondaire 15.

Le flux primaire et le flux secondaire sont séparés par un carter inter-veine 16 annulaire qui porte un bec de séparation 17. La veine secondaire 15, s'étend radialement à l'extérieur de la veine primaire 14 et est coaxiale avec cette dernière. Le flux d'air secondaire est éjecté par une tuyère secondaire 18 terminant la nacelle 13 alors que le flux d'air primaire est éjecté à l'extérieur de la turbomachine via une tuyère d'éjection 19 située en aval du générateur de gaz 3.

Sur la figure 2, la veine secondaire 15 est délimitée au moins en partie suivant l'axe longitudinal par un carter de compresseur 21 et un carter intermédiaire de redressement 22. Comme nous l'avons déjà présenté, ces carters 21, 22 ont un rôle structural car ceux-ci permettent la transmission d'efforts. Dans le présent exemple, le carter intermédiaire 22 est agencé entre le compresseur basse pression 4 et le compresseur haute pression 5. Le carter intermédiaire 22 est dénommé carter inter-compresseur. Le carter de compresseur 21 porte en partie le bec de séparation 17.

Le carter de compresseur 21 entoure ici le compresseur basse pression 4 et comprend une virole interne 23 et une virole externe 24, concentriques suivant l'axe longitudinal. Le compresseur basse pression 4, comme le compresseur haute pression 5 (et les turbines), comprend ici plusieurs étages d'aubages avec chacun une rangée annulaire d'aubes redresseurs (stators) montées respectivement en amont d'une rangée annulaire d'aubes mobiles (rotors). Sur cette figure 2 sont représentées quatre rangées annulaires d'aubes redresseurs 4b qui sont alternées avec quatre rangées annulaires d'aubes mobiles 4a. Chaque rangée d'aubes redresseurs comprend une pluralité d'aubes de redresseur ou fixes qui sont réparties circonférentiellement autour de l'axe longitudinal X. Les aubes de redresseur comprennent chacune une pale qui s'étend sensiblement radialement entre une paroi annulaire interne et une paroi annulaire externe (non représentées). La paroi annulaire externe est avantageusement portée par deux demi-coquilles angulaires centrées sur l'axe longitudinal.

Dans cet exemple, chaque rangée d'aubes mobiles 4a du compresseur comprend une pluralité d'aubes mobiles qui sont réparties également circonférentiellement autour d'un tambour (non représenté) centré sur l'axe longitudinal X et radialement depuis ce tambour. Le tambour est agencé dans un moyeu 30 qui est traversé par l'arbre basse pression 9. Les aubes mobiles sont soudées sur le tambour. Les aubes de redresseur dévient et redressent le flux aérodynamique en sortie de chaque aube mobile située en amont de celles-ci.

Les demi-coquilles du carter de compresseur sont réalisées dans un matériau composite. Les aubes mobiles et les aubes de redresseur sont réalisées dans un matériau métallique.

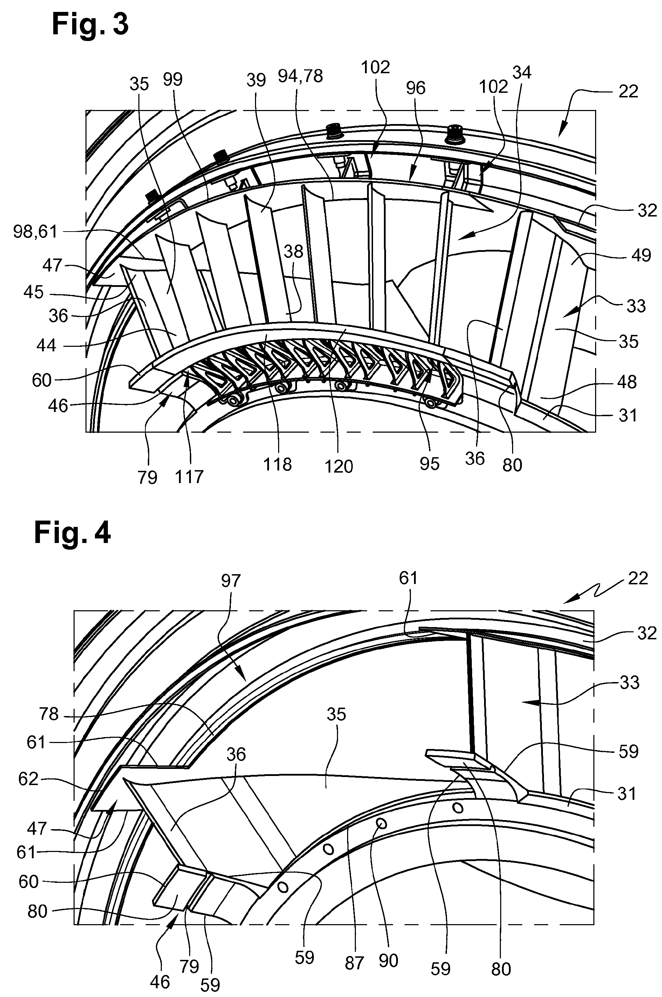

En référence aux figures 3 et 4, le carter intermédiaire 22 de redressement est annulaire et centré sur l'axe longitudinal X. Le carter intermédiaire 22 est situé au niveau du « col de cygne » du moyeu 30 (illustré sur la figure 1) de la turbomachine. Le carter intermédiaire 22 comprend une virole radialement interne 31 annulaire et une virole radialement externe 32 annulaire qui sont centrées sur l'axe longitudinal. Les viroles radialement interne et externe sont concentriques. Dans le présent exemple, le carter intermédiaire 22 est monobloc avec les viroles radialement interne et radialement externe 31, 32 (c'est-à-dire que les viroles 31, 32 sont venues de matière). Dans ce cas et avantageusement, le carter intermédiaire 22 est réalisé par fabrication additive.

Dans un autre mode de réalisation non représenté, le carter intermédiaire 22 est formé de plusieurs secteurs de carters monoblocs angulaires qui sont agencés de manière adjacentes suivant une direction circonférentielle autour de l'axe longitudinal X et qui sont fixés entre eux pour former un anneau.

Le carter intermédiaire 22 comprend également au moins un organe aérodynamique 33 qui s'étend radialement entre les viroles radialement interne 31 et externe 32. Au moins une aube de stator 34 est disposée de manière adjacente à l'organe aérodynamique 33 suivant la direction circonférentielle autour de l'axe longitudinal X. En particulier, plusieurs aubes de stator 34 sont disposées régulièrement autour de l'axe longitudinal X et entre deux organes aérodynamiques 33.

Les aubes de stator 34 sont également des aubes de redresseur. Dans la suite de la description, le terme « aube de stator » est utilisé pour le carter intermédiaire 22 et le terme « aube de redresseur » est utilisé pour le compresseur. Ici, la dernière rangée d'aubes de redresseur du compresseur est intégré dans le carter intermédiaire 22 de manière à réaliser une fonction de redressement audit carter intermédiaire et à obtenir un gain axial. En d'autres termes, toutes les aubes de stator sont intégrées dans un espace inter-bras suivant la direction circonférentielle. La dernière rangée annulaire d'aubes redresseurs du compresseur appartient au carter intermédiaire 22 qui est fixe. Et ce carter intermédiaire tel que configuré permet de redresser le flux d'air en sortie de la dernière rangée d'aubes mobiles 4a du compresseur basse pression, ici en amont.

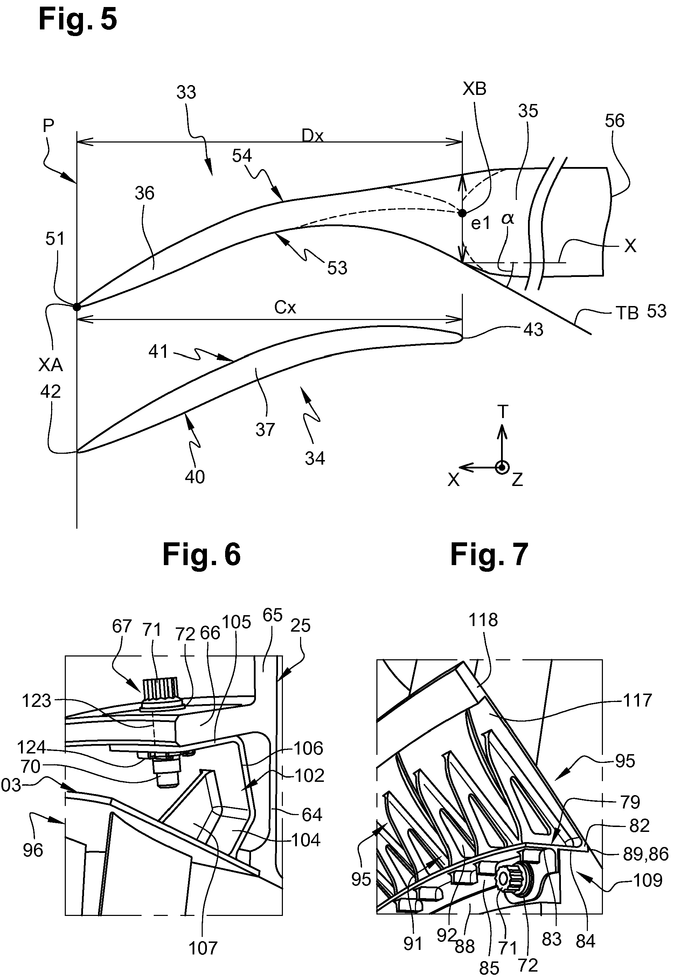

Sur la figure 5 en particulier, l'organe aérodynamique 33 est formé d'un bras structural 35 et d'une portion profilée 36 agencée en amont du bras structural 35. La portion profilée 36 présente le profil d'une aube de stator (ou d'aube de redresseur) qui est pour ainsi dire intégrée au bras structural. La portion profilée 36 permet de redresser le flux aérodynamique en sortie du compresseur basse pression 4 tandis que le bras structural 35 permet de relier structurellement la virole radialement interne 31 et la virole externe 32. Le bras structural assure même le soutient du moyeu 30 et du carter inter-veine 16 de la turbomachine et la transmission des efforts de la turbomachine.

Chaque aube de stator 34 comprend une pale 37 qui s'étend sensiblement radialement entre une extrémité radialement interne 38 et une extrémité radialement externe 39 (cf. figure 3). L'axe d'empilement des aubes de stator (entre les extrémités radialement interne et externe 38, 39) peut présenter un angle avec l'axe radial Z (l'axe d'empilement n'est pas tout à fait parallèle à l'axe radial Z). La pale 37 comprend une surface intrados 40 et une surface extrados 41 qui sont reliées en amont par un bord d'attaque 42 et en aval par un bord de fuite 43. Les surface intrados et extrados 40, 41 sont opposées suivant un axe transversal T (perpendiculaire à l'axe longitudinal ou suivant la direction circonférentielle). La section transversale de l'aube présente un profil incurvé. Chaque pale 37 de l'aube de stator 34 présente une corde axiale Cx qui est mesurée entre le bord d'attaque 42 et le bord de fuite 43 sensiblement suivant l'axe longitudinal.

La portion profilée 36 et le bras structural 35 sont avantageusement monoblocs de manière à optimiser le gain de masse de la turbomachine et les opérations de montage. Dans le même but, l'organe aérodynamique 33 est monobloc avec le carter intermédiaire 22, c'est-à-dire avec les viroles radialement interne et externe 31, 32. Le flux primaire circule entre les deux viroles 31, 32 et également entre les organes aérodynamiques 33 (bras structuraux et portion profilée).

L'organe aérodynamique 33 s'étend sensiblement axialement entre un bord d'attaque 51 et un bord distal 56. Le bord d'attaque 51 et le bord distal 56 sont reliés par une surface intrados 53 et une surface extrados 54. Il y a une continuité de surface entre les faces intrados de la portion profilée et du bras structural (qui forment la surface intrados 53) et entre les faces extrados de la portion profilée et le bras structural (qui forment la surface extrados 54). Le bord d'attaque 51 de l'organe aérodynamique 33 est aligné avec le bord d'attaque 42 des aubes de stator 34 adjacentes dans un plan P perpendiculaire à l'axe longitudinal X.

Toujours sur la figure 5, la portion profilée 36 comprend un bord amont qui est formé ou porté par le bord d'attaque de l'organe aérodynamique. Le bord amont de la portion profilée 36 est situé à une distance axiale Dx (délimitée par un point XA) prédéterminée d'une zone d'intersection (délimitée par un point XB) entre la portion profilée et le bras structural. Cette distance axiale Dx correspond à la longueur axiale de la portion profilée 36. La longueur axiale est sensiblement égale à la longueur de la corde axiale Cx d'une aube de stator 34. La zone d'intersection présente une épaisseur e1 dans la direction circonférentielle sensiblement égale à trois fois le maître couple de la portion profilée 36 (qui correspond également au maître couple d'une aube de stator 34). L'épaisseur e1 est mesurée entre la surface intrados 53 et la surface extrados 54 de l'organe aérodynamique 33. La tangente TB qui passe par le point XB au niveau de la surface intrados du bras structural présente un angle α (alpha) prédéterminé par rapport à l'axe longitudinal X et qui est compris entre 5° et 10°.

En référence à la figure 3, la portion profilée 36 s'étend radialement entre une extrémité radialement interne 44 et une extrémité radialement externe 45. De même, le bras structural 35 s'étend radialement entre une extrémité radialement interne 48 et une extrémité radialement externe 49. La portion profilée 36 et le bras structural 35 ont bien entendu la même hauteur radiale.

Avantageusement, les aubes de stator 34 et les organes aérodynamiques 33 sont pleins.

Comme nous pouvons le voir sur la figure 4, une plateforme radialement interne 46 s'étend axialement d'un bord radialement interne 87 circulaire de la virole radialement interne 31. En particulier, la plateforme 47 s'étend vers l'amont depuis le bord radialement interne comme illustré sur la figure 3. Cette plateforme radialement interne 46 comprend deux flancs 59 circonférentiels opposés suivant la direction circonférentielle et un rebord amont 60 qui est décalé axialement du bord radialement interne 87. Avantageusement, le rebord amont 60 s'étend suivant une direction parallèle au bord radialement interne 87. La plateforme radialement interne 46 comprend en outre une surface radialement interne 79 qui porte une première couche 80 de matériau abradable. Le matériau abradable se décompose facilement et étant friable lors des contacts avec le rotor (dernière rangée d'aubes mobiles du compresseur basse pression) tout en permettant de réaliser une étanchéité avec celui-ci. Le matériau abradable comprend un matériau métallique ou non métallique. Cette première couche 80 s'étend suivant la direction circonférentielle et sur toute la largeur transversale de la plateforme radialement interne.

Une plateforme radialement externe 47 s'étend également axialement depuis un bord radialement externe 78 de la virole radialement externe 32. De même, la plateforme 47 s'étend vers l'amont depuis le bord radialement externe comme illustré sur la figure 3. La plateforme radialement externe 47 comprend deux flancs 61 circonférentiels opposés qui sont reliés par un rebord amont 62. Cette dernière est parallèle au bord radialement externe 78.

Les plateformes radialement interne et externe 46, 47 sont monoblocs avec les viroles radialement interne et externe 31, 32. L'extrémité radialement interne 44 de la portion profilée 36 est solidaire de la plateforme radialement interne 46 et l'extrémité radialement externe 45 de la portion profilée 36 est solidaire de la plateforme radialement externe 47. En d'autres termes, la portion profilée 36 s'étend radialement entre la plateforme radialement interne et la plateforme radialement externe. Une partie des extrémités radialement interne et externe du bras structural 35 est respectivement solidaire des plateformes radialement interne et externe comme cela est illustré sur la figure 4.

En particulier et en référence à la figure 3, l'extrémité radialement interne 44 est solidaire de la virole radialement interne 31 et l'extrémité radialement externe 45 est solidaire de la virole radialement externe 32. Le bras structural 35 comprend également une extrémité radialement interne 48 qui est solidaire de la plateforme radialement interne 46 et une extrémité radialement externe 49 qui est solidaire de la plateforme radialement externe 47.

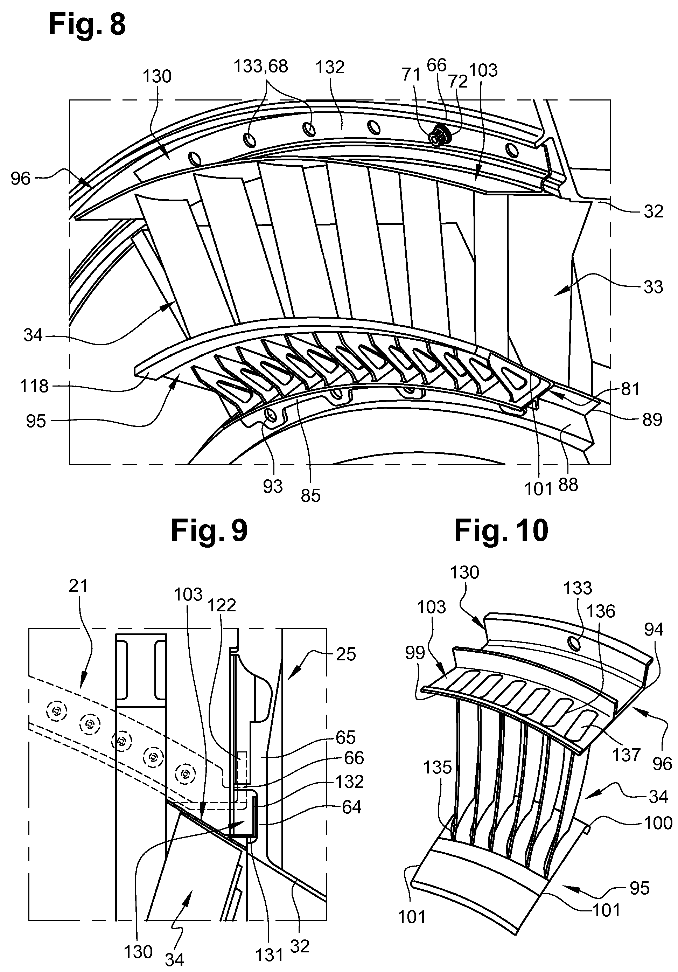

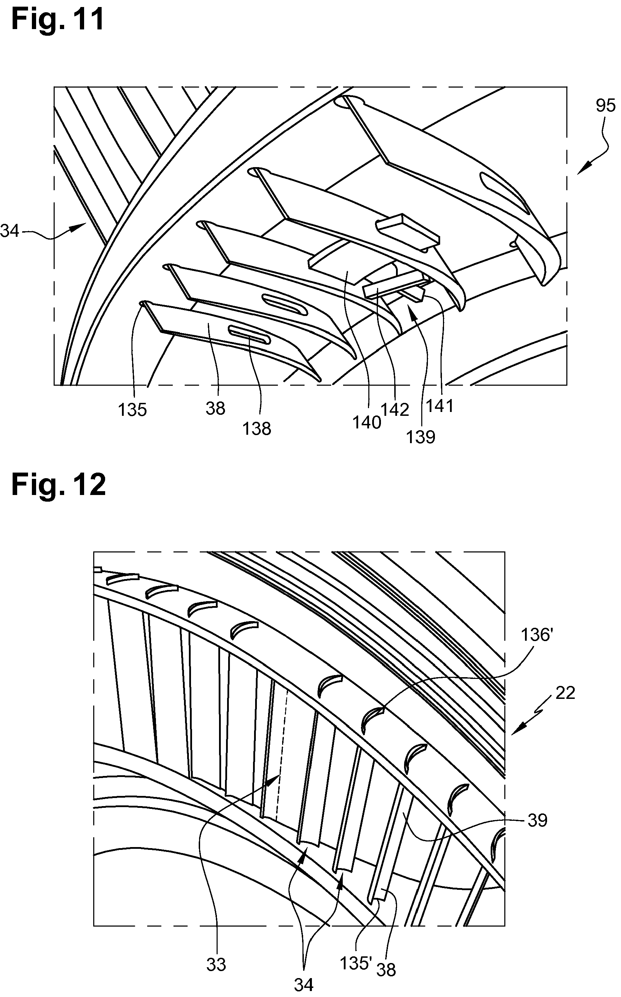

Les aubes de stator 34 entre les organes aérodynamiques 33 sont rapportées sur le carter intermédiaire 22. Nous entendons par le terme « rapporté » dans la présente description, une pièce distincte (ici les aubes de stator) du carter intermédiaire et qui n'est pas réalisée suivant le même procédé de réalisation du carter intermédiaire. Dans ce cas, les aubes de stator sont réalisées séparément du reste des organes du carter intermédiaire. Celles-ci sont ensuite rapportés et fixées sur le carter intermédiaire. Pour cela, les extrémités radialement interne 38 de chaque aube de stator 34 est solidaire d'une première plateforme 95, qui s'étend sur une portion angulaire suivant une direction circonférentielle (cf. figures 3, 11). De manière similaire, l'extrémité radialement externe 39 de chaque aube de stator est solidaire d'une deuxième plateforme 96, qui s'étend sur une portion angulaire suivant la direction circonférentielle (tel qu'illustrée sur les figures 3, 10). Les première et deuxième plateformes sont rapportées et fixées également et respectivement sur le carter intermédiaire 22 (notamment les viroles). Les aubes de stator 34 et les première et deuxième plateformes 95, 96 sont monoblocs de manière à former au moins un ensemble de redressement rapporté entre deux organes aérodynamiques 33 (circonférentiellement). Six aubes de stator 34 s'étendent chacune radialement entre les première et deuxième plateformes 95, 96. Ces aubes de stator 34 présentent avantageusement une corde axiale identique.

De manière générale, le carter intermédiaire 22 comprend environ six organes aérodynamiques 33 réparties régulièrement autour de l'axe longitudinal et au moins une quarantaine d'aubes de stator 34 installée autour de l'axe longitudinal également (et entre les organes aérodynamiques 33 circonférentiellement).

Comme nous pouvons le voir sur la figure 4, les plateformes radialement interne et externe 46, 47 forment une encoche 97 qui sont destinées à recevoir respectivement la première plateforme 95 et la deuxième plateforme 96. Les encoches 97 sont délimitées respectivement par le bord (radialement interne ou externe) 78, 87 d'une virole 31, 32 et deux flancs 61, 59 des plateformes radialement interne et externe adjacentes 46, 47 qui sont espacés et qui sont en regard l'un de l'autre suivant la direction circonférentielle. Le bord 78, 87 et les deux flancs 61, 59 présentent une forme en U.

La deuxième plateforme 96 comprend une bordure aval 94 qui vient en appui contre le bord radialement externe 78 de la virole radialement externe 32. Chaque extrémité circonférentielle 98 d'une deuxième plateforme est en appui contre un flanc 61d'une plateforme radialement externe 47 adjacente circonférentiellement. La deuxième plateforme 96 comprend également une bordure amont 99 (opposée axialement à la bordure aval 94) qui présente une continuité de surface avec le rebord amont 62 de la plateforme radialement externe 47. En d'autres termes, la longueur de la deuxième plateforme 96 suivant l'axe longitudinal est sensiblement égale à la longueur de la plateforme radialement externe 47.

La première plateforme 95 comprend une bordure aval 100 (cf. figure 10) qui vient en appui contre le bord 87 de la virole radialement interne. Chaque extrémité circonférentielle 101 d'une première plateforme 95 est en appui contre un flanc 59 d'une plateforme radialement interne 46 adjacente circonférentiellement. La première plateforme 95 présente également une surface radialement interne 117 qui comprend également une deuxième couche 118 de matériau abradable comprenant par exemple un matériau métallique ou non métallique. La deuxième couche 118 de matériau abradable est alignée suivant la direction circonférentielle avec la première couche 80 de matériau abradable des plateformes radialement internes adjacentes. Le premier rebord 60 de la première couche de matériau 80 présente une continuité de surface avec le deuxième rebord 120 de la deuxième couche 118 de matériau adjacente. La première et la deuxième couches 80, 118 de matériau présentent la même épaisseur suivant l'axe radial ainsi que la même longueur suivant l'axe longitudinal et la même largeur transversalement.

Sur la figure 6, la deuxième plateforme 96 est ici fixée sur la virole radialement externe via des organes de fixation 67. La virole radialement externe 32 comprend une paroi radiale 25 annulaire (cf. figures 2, 8, 9) qui s'étend radialement vers l'extérieur depuis une surface supérieure 63 (cf. figure 2) de la virole radialement externe 32. La paroi radiale 25 présente, suivant une section axiale, une forme générale en T avec deux branches opposées qui s'étendent chacune radialement (dite branche inférieure 64 et branche supérieure 65) et une jambe axiale 66. La branche inférieure 64 est reliée à la virole radialement externe et la branche supérieure 65, s'étendant radialement vers l'extérieur, est destinée à être reliée à une structure fixe de la turbomachine.

Dans l'exemple de réalisation, la deuxième plateforme 96 comprend des pattes 102 (quatre pattes telles que représentées sur la figure 3) qui s'étendent radialement vers l'extérieur depuis une surface radialement externe 103 de la deuxième plateforme 96. Chaque patte 102 présente une section axiale de forme générale en U avec deux branches (dénommées ci-après première branche 104 et deuxième branche 105) et un fond 106. Une nervure 107 relie le fond de chaque patte et la deuxième plateforme 96. La nervure 107 est également reliée à la première branche 104. La nervure 107 est située dans une zone médiane de la patte suivant la direction circonférentielle en situation d'installation. La première branche 104 est définie dans un plan qui présente un angle ouvert d'environ 75° avec le plan dans lequel est défini le fond. En revanche, le plan du fond 106 forme un angle d'environ 90° (droit) avec la deuxième branche 105. La première branche 104 s'élève de la surface radialement externe 103. Le fond 106 est en contact avec la branche inférieure 64 de paroi radiale de la virole radialement externe. La deuxième branche 105 est en appui contre et fixée avec les organes de fixation 67 sur la jambe axiale 66 de la paroi radiale. En situation d'installation, le plan de la deuxième branche 105 est parallèle à celui dans lequel est définie la jambe axiale 66. De même, le plan du fond 106 de la patte est également parallèle au plan de la branche inférieure 64.

La deuxième branche 105 comprend une ouverture (non représentée) traversant celle-ci de part et d'autre suivant un axe parallèle à l'axe radial. Cette ouverture est destinée à venir en regard d'un orifice traversant 123 (dont un est représenté en pointillé sur la figure 6) que comprend la jambe axiale 66. La jambe axiale 66 comprend plusieurs orifices traversants 123 dont les axes sont sensiblement parallèles à l'axe radial. Chaque ouverture et orifice traversant 123 correspondant sont destinés à coopérer avec les organes de fixation et sont répartis régulièrement suivant la direction circonférentielle. Les organes de fixation 67 peuvent réaliser une liaison filetée et peuvent être du type vis, goujon, écrous, boulon. Nous voyons une vis 70 traverser chaque orifice traversant 123 et ouverture, et un écrou 124 qui vient serrer la deuxième branche 105 sur la jambe axiale 66. L'écrou 124 est avantageusement, mais non limitativement un écrou riveté. Une rondelle 72 est agencée entre la tête 71 de la vis 70 et la jambe axiale 66 de la paroi radiale de virole radialement externe. La fixation ici est dite radiale.

En référence à la figure 7, la première plateforme 95 est également fixée sur la carter intermédiaire via des organes de fixation 67 sensiblement similaires à ceux-décrits ci-dessus (vis, boulons, écrou, goujon, boulon, au tout élément permettant un montage et/ou démontage facile(s)). La première plateforme comprend une embase 109 qui s'étend à son extrémité aval 82. La première plateforme et l'embase présentent ici une section axiale sensiblement en forme de V. L'embase 109 présente ici une section axiale avec une forme générale en T avec une branche amont 83, une branche aval 84 et une jambe radiale 85. La branche aval 84 s'étend suivant l'axe longitudinal et comprend une extrémité aval 86 destinée à venir contre une collerette 89 annulaire définie dans un plan radial de la virole radialement interne 31. La branche aval 84 est destinée à être agencée radialement à l'extérieur d'une face circonférentielle d'une portée annulaire 88 de la virole radialement interne 31. La branche amont 83 s'étend également axialement. Quant à la jambe radiale 85, cette dernière est destinée à être en appui contre la portée 88 annulaire qui est définie dans un plan perpendiculaire à l'axe longitudinal. La portée annulaire comprend plusieurs perçages 90 (cf. figure 4) qui sont disposés régulièrement autour de l'axe longitudinal. Chaque perçage 90 présente un axe sensiblement parallèle à l'axe longitudinal. Dans cet exemple de réalisation (illustré sur la figure 4) il y a quatre perçages.

La jambe radiale 85 comprend un trou 93 (cf. figure 8) traversant celle-ci de part et d'autre suivant d'axe longitudinal X. Chaque trou est destiné à coopérer avec un perçage 90 de la portée annulaire 88 et à recevoir une vis coopérant avec un insert. Une rondelle 72 est prévue entre la tête de vis 71 et la jambe radiale 85. Au moins un renfort 91 s'étend également entre la surface radialement interne 79 de l'embase et la surface radialement interne 117 de la première plateforme 95 de manière à apporter de la rigidité à cette dernière. Plusieurs renforts (ici douze sur la figure 3) sont répartis régulièrement autour de l'axe longitudinal. Chaque renfort présente une section axiale de forme générale triangulaire avec une ouverture 92 qui le traverse de part et d'autre suivant la direction circonférentielle (en situation d'installation) de manière à ne pas impacter la masse de la turbomachine.

Un autre mode de réalisation d'un ensemble de redressement est illustré sur les figures 8 et 9. En particulier, la deuxième plateforme 96 est rapportée et fixée sur le carter intermédiaire 22 au moyen d'une bride de fixation radiale 130. Cette dernière s'étend d'une part, radialement depuis la surface radialement externe 103 de la deuxième plateforme 96, et d'autre part suivant la direction circonférentielle sur toute la périphérie de la deuxième plateforme 96. La bride de fixation radiale 130 présente une section axiale générale en forme de L avec une première paroi axiale 131 et une deuxième paroi radiale 132. La première paroi axiale 131 s'étend depuis la surface radialement externe 103 de la deuxième plateforme 96. La deuxième paroi radiale 132 s'étend suivant l'axe radial depuis une extrémité de la première paroi axiale 131. La deuxième paroi radiale 132 présente une surface d'appui (perpendiculaire à l'axe longitudinal) qui est destinée à venir en appui (plan sur plan) contre la branche inférieure 64 de la paroi radiale 25 de la virole radialement externe 32 tel qu'illustré sur la figure 9. Cela permet un meilleur positionnement de l'ensemble de redressement sur le carter intermédiaire 22. La deuxième paroi radiale présente une hauteur inférieure à celle de la branche inférieure 64. Celle-ci s'arrête donc juste en-dessous de la jambe axiale 66 de la paroi radiale 25. Des orifices 68 traversent la paroi radiale 25 de part et d'autre et sont disposés régulièrement autour de l'axe longitudinal. Ces orifices 68 présentent chacun un axe sensiblement parallèle à l'axe longitudinal. La bride de fixation radiale 130 comprend des perçages axiaux 133 qui la traversent de part et d'autre. Les orifices 68 et les perçages axiaux 133 sont respectivement en regard l'un de l'autre sur la figure 8. Ceux-ci sont destinés à coopérer avec des organes de fixation 67 qui réalisent une fixation axiale. Sur l'exemple illustré, une vis coopérant avec un insert est introduite dans un perçage axial 133 et un orifice correspondant. Une rondelle 72 est installée entre la tête de vis 71 et la deuxième paroi radiale 132.

La première plateforme 95 est fixée sur la virole radialement interne 31 de manière similaire à celle de la figure 7. La fixation ici axiale réalise un blocage axial de la première plateforme sur le carter intermédiaire 22.

Suivant encore un autre mode de réalisation illustré sur les figures 10 et 11, l'ensemble de redressement est rapporté et fixé sur les viroles radialement interne et externe 31, 32. La bride de fixation radiale 130 comprend des perçages axiaux 133 qui la traversent de part et d'autre et qui coopèrent avec les orifices 68 de la paroi radiale 25. Des organes de fixation 67 (vis, insert, rondelle) permettent la solidarisation de la bride de fixation 130 et de la paroi radiale 25. Ce mode de réalisation diffère du mode de réalisation précédent par le fait que les première et deuxième plateformes comprennent des première et deuxième fentes 135, 136 qui sont destinées à recevoir respectivement les extrémités radialement internes et externes 38, 39 des aubes de stator 34 lesquelles sont rapportées sur celles-ci. En particulier, chaque première fente 135 et deuxième fente 136 traversent respectivement les plateformes 95, 96 de part et d'autre suivant l'axe radial. Ces première et deuxième fentes 135, 136 sont également régulièrement distribuées autour de l'axe longitudinal. L'extrémité radialement externe 38 de chaque aube de stator 34 est solidaire d'une plateforme de tête (ou plateforme de butée) 137 qui présente une dimension supérieure à celle des fentes. Ces dernières présentent une forme complémentaire à celle des pales. Plus précisément encore, les dimensions sont égales ou légèrement supérieures (de l'ordre de +0.2 mm) à celles de la pale 37 de l'aube de stator 34 de manière à permettre le passage d'une pale. La plateforme de tête 137 repose sur la surface radialement externe 103 de la deuxième plateforme 96. Avantageusement, mais non limitativement, les plateformes de tête 137 sont soudées sur la deuxième plateforme 96.

S'agissant de l'extrémité radialement interne 38 des pales 37, celles-ci coopèrent avec au moins un dispositif de blocage 139 pour les maintenir sur la première plateforme 95. A cet effet, chaque extrémité radialement interne 38 comprend une ouverture 138 qui traverse la pale de part et d'autre transversalement. Chaque ouverture 138 présente une forme oblongue ou allongée suivant une direction sensiblement parallèle à l'axe longitudinal. Comme nous pouvons le voir plus précisément sur la figure 11, un dispositif de blocage 139 comprend une attache 140 qui est introduite dans au moins une ouverture 138 de manière à permettre le blocage radial de l'extrémité radialement interne sur la première plateforme 95. Chaque attache 140 présente une section transversale sensiblement complémentaire avec la section axiale de l'ouverture. Sur la figure 11, une attache 140 est glissée dans deux ouvertures 138 d'aubes de stator adjacentes. Le dispositif de blocage 139 comprend également une tige 141 et une butée 142, la tige 141 étant libre à une de ses extrémités et reliée à l'autre de ses extrémités à la butée 142. La butée 142 s'étend également transversalement entre deux extrémités radialement interne des aubes de manière à les maintenir en position l'une par rapport à l'autre.

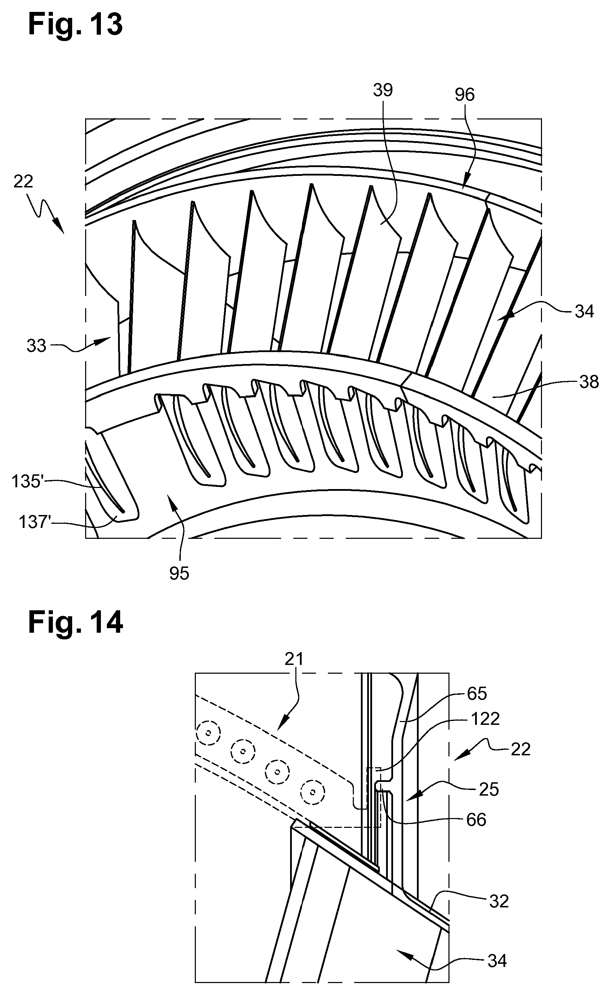

Un autre mode de réalisation du carter intermédiaire est illustré sur les figures 12 à 14. Nous voyons que les organes aérodynamiques 33 sont monoblocs (réalisés d'une seule pièce) avec les viroles radialement interne et radialement externe. La première plateforme 95 et la deuxième plateforme 96 sont également monoblocs avec les viroles radialement interne et radialement externe. Avantageusement, le carter intermédiaire (avec les viroles et organes aérodynamiques monobloc) est réalisé par fonderie. La première plateforme 95 et la deuxième plateforme 96 sont continues entre deux organes aérodynamiques 33. Les première et deuxième plateformes comprennent respectivement des première et deuxième fentes 135', 136' qui sont destinées à recevoir les extrémités radialement interne et externe des aubes de stator 34. Les fentes 135', 135' traversent radialement de part et d'autre les paroi des première et deuxième plateforme 95, 96. Les aubes de stator 34 sont rapportées sur celles-ci. Les aubes de stator 34 sont réalisées séparément des première et deuxième plateformes 95, 96 et du reste des organes du carter intermédiaire. En particuliers, chaque aube de stator 34 est glissée dans une première fente 135' de la première plateforme 95 radialement et en direction de la deuxième fente 136' correspondante. L'extrémité radialement interne 38 de chaque aube de stator est équipée dans ce cas d'une plateforme de butée (ou plateforme de pied) 137' (illustrée précisément sur la figure 13) qui vient contre la surface radialement interne de la première plateforme 95. Les extrémités radialement externes sont chacune fixées sur la deuxième plateforme 96. Avantageusement, mais non limitativement, la fixation des extrémités radialement interne est réalisée par une soudure. Chaque plateforme de butée 137' est également soudée sur la première plateforme 95. Ici le carter intermédiaire est formé de plusieurs secteurs angulaires monoblocs. De manière alternative, le carter intermédiaire peut être formé en formant une unique roue comprenant la virole radialement interne 31 (avec la première plateforme 95 venue de matière) et la virole radialement externe 32 (avec la deuxième plateforme 96 venue de matière). Une telle configuration permet de faciliter la maintenance du carter en intervenant uniquement sur la ou les aubes de stator endommagées et ainsi de réduire le coûts dus à la maintenance et à la fabrication des pièces.

En référence aux figures 9 et 14, le carter de compresseur 21 est fixé sur le carter intermédiaire 22 au niveau de la paroi radiale 25. Le carter de compresseur 21 comprend une paroi de fond 122 qui est définie dans un plan contenant l'axe radial. Cette paroi de fond 122 est destinée à se fixer sur la paroi radiale 25 et en particulier sur la branche supérieure 65. La jambe axiale 66 permet de centrer le carter de compresseur sur la paroi radiale 25 du carter intermédiaire 22. La paroi de fond 122 s'étend radialement au-dessus de la jambe axiale 66. la paroi de fond comprend des orifices permettant le passage d'organes de fixation sur la jambe axiale 66.

## Revendications

1. Carter intermédiaire (22) annulaire de turbomachine (1) d'axe longitudinal X, en particulier pour un aéronef, dans lequel est destiné à circuler au moins en partie un flux d'air aérodynamique, le carter intermédiaire (22) comprenant :
- une virole radialement interne (31) annulaire,
- une virole radialement externe (32) annulaire,
- au moins une aube de stator (34) s'étendant sensiblement suivant un axe radial Z, l'aube de stator (34) comprenant une pale (37) avec un bord d'attaque (42) et un bord de fuite (43), et
- au moins un organe aérodynamique (33) qui est formé d'un bras structural (35) s'étendant radialement au moins en partie entre la virole radialement interne (31) et la virole radialement externe (32),
**caractérisé en ce que** l'aube de stator s'étend entre une première plateforme (95) et une deuxième plateforme (96) et l'organe aérodynamique (33) comprend un bord d'attaque (51) qui est aligné avec le bord d'attaque (42) de l'aube de stator (34) dans un plan (P) perpendiculaire à l'axe longitudinal X, le bord d'attaque (51) de l'organe aérodynamique (33) étant porté par une portion profilée (36) agencée en amont du bras structural (35) suivant le sens de circulation du flux d'air aérodynamique, la portion profilée (36) et le bras structural (35) étant monobloc, et **en ce que** l'organe aérodynamique (33) est monobloc avec la virole radialement interne (31) et la virole radialement externe (32), le carter intermédiaire (22) comprenant au moins deux organes aérodynamiques (33) espacés suivant la direction circonférentielle autour de l'axe longitudinal X et un ensemble de redressement qui est rapporté entre les deux organes aérodynamiques (33) et qui est distinct des deux organes aérodynamiques, l'ensemble de redressement comprenant la première plateforme (95), la deuxième plateforme (96) et une pluralité d'aubes de stator (34) s'étendant radialement entre les première et deuxième plateformes (95, 96) et étant réparties régulièrement suivant la direction circonférentielle, chaque bord d'attaque (42) de la pluralité d'aubes de stator (34) est aligné avec le bord d'attaque (51) de l'organe aérodynamique dans le plan (P) perpendiculaire à l'axe longitudinal X.

2. Carter intermédiaire (22) selon la revendication précédente, **caractérisé en ce que** la portion profilée (36) s'étend radialement entre une plateforme radialement interne (46) et une plateforme radialement externe (47), les plateformes radialement interne et radialement externe étant respectivement monobloc avec la virole radialement interne (31) et la virole radialement externe (32), et **en ce que** la plateforme radialement interne (46) présente une surface radialement interne (79) portant une première couche (80) de matériau abradable.

3. Carter intermédiaire (22) selon la revendication précédente, **caractérisé en ce que** la première plateforme (95) et la deuxième plateforme (96) sont rapportées et fixées respectivement sur la virole radialement interne (31) et la virole radialement externe (32), la première plateforme (95) présentant une surface radialement interne (117) portant une deuxième couche (118) de matériau abradable, la deuxième couche de matériau abradable (118) étant alignée suivant la direction circonférentielle avec la première couche (80) de matériau abradable.

4. Carter intermédiaire (22) selon l'une quelconque des revendications précédentes, **caractérisé en ce que** la première plateforme (95) comprend une embase (109) qui est fixée sur une portée annuaire (88) de la virole radialement interne (31) avec au moins un organe de fixation (67) réalisant une fixation axiale.

5. Carter intermédiaire (22) selon l'une quelconque des revendications précédentes, **caractérisé en ce que** la deuxième plateforme (96) est fixée sur une paroi radiale (25) de la virole radialement externe (32) qui s'étend radialement vers l'extérieur depuis une surface radialement externe (63) et via au moins un organe de fixation.

6. Carter intermédiaire (22) selon la revendication précédente, **caractérisé en ce que** la deuxième plateforme (96) présente des pattes (102) qui s'étendent chacune depuis sa surface radialement externe (103), chaque patte (102) étant fixée sur une jambe axiale (66) de la paroi radiale (25) avec les organes de fixation (67) réalisant une fixation radiale.

7. Carter intermédiaire (22) selon la revendication 6, **caractérisé en ce que** la deuxième plateforme (96) comprend une bride fixation radiale (130) s'étendant radialement vers l'extérieur depuis sa surface radialement externe (103) et suivant la direction circonférentielle sur toute sa périphérie, la bride de fixation radiale (130) étant fixée sur une branche inférieure (64) de la paroi radiale (25) qui s'étend suivant l'axe radial et avec les organes de fixation (67) réalisant une fixation axiale.

8. Carter intermédiaire (22) selon l'une quelconque des revendications précédentes, **caractérisé en ce que** l'ensemble de redressement est monobloc.

9. Carter intermédiaire (22) selon l'une quelconque des revendications précédentes, **caractérisé en ce que** le bord d'attaque (51) de l'organe aérodynamique est situé à une distance axiale (Dx) d'une zone d'intersection entre la portion profilée (36) et le bras structural (35), et **en ce que** la zone d'intersection présente une épaisseur (e1) suivant la direction circonférentielle sensiblement égale à trois fois le maître couple de la portion profilée (36).

10. Carter intermédiaire (22) selon l'une quelconque des revendications précédentes, **caractérisé en ce que** l'aube de stator (34) présente une corde axiale (Cx) mesurée entre son bord d'attaque (42) et son bord de fuite (43) et **en ce que** la portion profilée (36) présente une longueur axiale mesurée entre le bord d'attaque (51) de l'organe aérodynamique (33) et la zone d'intersection sensiblement égale à la corde axiale (Cx).

11. Carter intermédiaire (22) selon l'une quelconque des revendications précédentes, **caractérisé en ce qu'**il est réalisé par fonderie ou fabrication additive.

12. Carter intermédiaire (22) annulaire de turbomachine (1) d'axe longitudinal X, en particulier pour un aéronef, dans lequel est destiné à circuler au moins en partie un flux d'air aérodynamique, le carter intermédiaire (22) comprenant :
- une virole radialement interne (31) annulaire,
- une virole radialement externe (32) annulaire,
- au moins une aube de stator (34) s'étendant sensiblement suivant un axe radial Z, l'aube de stator (34) comprenant une pale (37) avec un bord d'attaque (42) et un bord de fuite (43), et
- au moins un organe aérodynamique (33) qui est formé d'un bras structural (35) s'étendant radialement au moins en partie entre la virole radialement interne (31) et la virole radialement externe (32),
**caractérisé en ce que** l'aube de stator s'étend entre une première plateforme (95) et une deuxième plateforme (96) et l'organe aérodynamique (33) comprend un bord d'attaque (51) qui est aligné avec le bord d'attaque (42) de l'aube de stator (34) dans un plan (P) perpendiculaire à l'axe longitudinal X, le bord d'attaque (51) de l'organe aérodynamique (33) étant porté par une portion profilée (36) agencée en amont du bras structural (35) suivant le sens de circulation du flux d'air aérodynamique, la portion profilée (36) et le bras structural (35) étant monobloc, et **en ce que** l'organe aérodynamique (33) est monobloc avec la virole radialement interne (31) et la virole radialement externe (32), et **en ce que** la première plateforme (95) est monobloc avec la virole radialement interne (31) et la deuxième plateforme (96) est monobloc avec la virole radialement externe (32), les première et deuxième plateformes (95, 96) comprenant chacune respectivement une pluralités de fentes (135, 135', 136, 136') de forme complémentaire avec les pales (37) des aubes de stator (34) qui sont distribuées régulièrement autour de l'axe longitudinal X, chaque aube de stator (34) comprenant une extrémité radialement interne (38) qui est reçue dans une première fente (135, 135') correspondante de la première plateforme (95) et une extrémité radialement externe qui est reçue dans une deuxième fente (136, 136') correspondante de la deuxième plateforme (96).

13. Carter intermédiaire (22) selon la revendication précédente, **caractérisé en ce que** chacune des extrémités radialement externe ou interne est solidaire d'une plateforme de butée (137, 137') reposant radialement à l'extérieur d'une première ou deuxième plateforme (95, 96) et l'autre de chacune des extrémités radialement interne ou externe opposée radialement est bloquée ou fixée sur la première ou deuxième plateforme.

14. Carter intermédiaire (22) selon la revendication précédente, **caractérisé en ce que** le blocage ou la fixation est réalisée par un dispositif de blocage (139) ou une soudure.

15. Turbomachine (1) double flux d'axe longitudinal X, en particulier pour aéronef, comprenant :
- au moins une soufflante (2) générant un flux d'air et comprenant au moins une rangée annulaire d'aubes de soufflante (2b) portées par un moyeu (30) d'axe longitudinal X,
- un bec de séparation (17), en aval de la rangée d'aubes de soufflante (2b) séparant le flux d'air en un flux primaire circulant dans une veine primaire (14) annulaire et en un flux secondaire circulant dans une veine secondaire (15) annulaire,
- au moins un compresseur (4, 5) agencé en aval d'une entrée de la veine primaire formée par un bord annulaire du bec de séparation (17) et comprenant des rangées annulaires d'aubes mobiles (4a) et d'aubes redresseur (4b), et
- au moins un carter intermédiaire (22) de turbomachine selon l'une quelconque des revendications précédentes, le carter intermédiaire (22) comprenant une pluralité d'aubes de stator (34) réparties autour de l'axe longitudinal X de manière à redresser le flux d'air en sortie de la dernière rangée d'aubes mobiles (4a) du compresseur.

## Patentansprüche

1. Ringförmiges Zwischengehäuse (22) eines Turbotriebwerks (1) mit Längsachse X, insbesondere für ein Luftfahrzeug, wobei es mindestens zum Teil dazu bestimmt ist, einen aerodynamischen Luftstrom zirkulieren zu lassen, wobei das Zwischengehäuse (22) Folgendes umfasst:
- einen radial internen ringförmigen Klemmring (31),
- einen radial externen ringförmigen Klemmring (32),
- mindestens eine Statorschaufel (34), die sich im Wesentlichen entlang einer radialen Achse Z erstreckt, wobei die Statorschaufel (34) ein Blatt (37) mit einer Anströmkante (42) und einer Abströmkante (43) umfasst, und
- mindestens ein aerodynamisches Bauteil (33), das aus einem Strukturarm (35) gebildet ist, der sich mindestens zum Teil radial zwischen dem radial internen ringförmigen Klemmring (31) und dem radial externen ringförmigen Klemmring (32) erstreckt,
**dadurch gekennzeichnet, dass** die Statorschaufel sich zwischen einer ersten Plattform (95) und einer zweiten Plattform (96) erstreckt und das aerodynamische Bauteil (33) eine Anströmkante (51) umfasst, die mit der Anströmkante (42) der Statorschaufel (34) in einer Ebene (P) ausgerichtet ist, die senkrecht zu der Längsachse X vorliegt, wobei die Anströmkante (51) des aerodynamischen Bauteils (33) durch einen profilierten Abschnitt (36) getragen wird, der stromaufwärts des Strukturarms (35), entlang der Zirkulationsrichtung des aerodynamischen Luftstroms, angeordnet ist, wobei der profilierte Abschnitt (36) und der Strukturarm (35) einteilig sind, und dadurch, dass das aerodynamische Bauteil (33) mit dem radial internen ringförmigen Klemmring (31) und dem radial externen ringförmigen Klemmring (32) einteilig ist, wobei das Zwischengehäuse (22) mindestens zwei entlang der Umfangsrichtung um die Längsachse X herum beabstandete aerodynamische Bauteile (33) und eine Gleichrichteranordnung umfasst, die zwischen den zwei aerodynamischen Bauteilen (33) eingesetzt ist und die sich von den zwei aerodynamischen Bauteilen unterscheidet, wobei die Gleichrichteranordnung die erste Plattform (95), die zweite Plattform (96) und eine Vielzahl von Statorschaufeln (34) umfasst, die sich radial zwischen der ersten und der zweiten Plattform (95, 96) erstrecken und die entlang der Umfangsrichtung regelmäßig verteilt sind, wobei jede Anströmkante (42) der Vielzahl von Statorschaufeln (34) mit der Anströmkante (51) des aerodynamischen Bauteils in der Ebene P ausgerichtet ist, die senkrecht zu der Längsachse X vorliegt.

2. Zwischengehäuse (22) nach dem vorstehenden Anspruch, **dadurch gekennzeichnet, dass** der profilierte Abschnitt (36) sich radial zwischen einer radial internen Plattform (46) und einer radial externen Plattform (47) erstreckt, wobei die radial interne und die radial externe Plattform jeweils mit dem radial internen Klemmring (31) und dem radial externen Klemmring (32) einteilig sind, und dadurch, dass die radial interne Plattform (46) eine radial interne Oberfläche (79) aufweist, die eine erste Schicht (80) aus abreibbarem Material trägt.

3. Zwischengehäuse (22) nach dem vorstehenden Anspruch, **dadurch gekennzeichnet, dass** die erste Plattform (95) und die zweite Plattform (96) jeweils an dem radial internen Klemmring (31) und dem radial externen Klemmring (32) eingesetzt und befestigt sind, wobei die erste Plattform (95) eine radial interne Oberfläche (117) aufweist, die eine zweite Schicht (118) aus abreibbarem Material trägt, wobei die zweite Schicht (118) aus abreibbarem Material entlang der Umfangsrichtung mit der ersten Schicht (80) aus abreibbarem Material ausgerichtet ist.

4. Zwischengehäuse (22) nach einem der vorstehenden Ansprüche, **dadurch gekennzeichnet, dass** die erste Plattform (95) einen Sockel (109) umfasst, der an einem ringförmigen Umfang (88) des radial internen Klemmrings (31) mit mindestens einem Befestigungsbauteil (67) befestigt ist, wodurch eine axiale Befestigung hergestellt wird.

5. Zwischengehäuse (22) nach einem der vorstehenden Ansprüche, **dadurch gekennzeichnet, dass** die zweite Plattform (96) an einer radialen Wand (25) des radial externen Klemmrings (32) befestigt ist, die sich ab einer radial externen Oberfläche (63) und über mindestens ein Befestigungsbauteil radial in Richtung der Außenseite erstreckt.

6. Zwischengehäuse (22) nach dem vorstehenden Anspruch, **dadurch gekennzeichnet, dass** die zweite Plattform (96) Laschen (102) aufweist, die sich jeweils ab der radial externen Oberfläche (103) erstrecken, wobei jede Lasche (102) auf einem axialen Schenkel (66) der radialen Wand (25) mit den Befestigungsbauteilen (67) befestigt ist, wodurch eine radiale Befestigung hergestellt wird.

7. Zwischengehäuse (22) nach Anspruch 6, **dadurch gekennzeichnet, dass** die zweite Plattform (96) einen radialen Befestigungsflansch (130) umfasst, der sich ab seiner radial externen Oberfläche (103) und entlang der Umfangsrichtung über seine gesamte Peripherie radial in Richtung der Außenseite erstreckt, wobei der radiale Befestigungsflansch (130) auf einem unteren Zweig (64) der radialen Wand (25) befestigt ist, die sich entlang der radialen Achse erstreckt und wodurch mit den Befestigungsbauteilen (67) eine axiale Befestigung hergestellt wird.

8. Zwischengehäuse (22) nach einem der vorstehenden Ansprüche, **dadurch gekennzeichnet, dass** die Gleichrichteranordnung einteilig ist.

9. Zwischengehäuse (22) nach einem der vorstehenden Ansprüche, **dadurch gekennzeichnet, dass** die Anströmkante (51) des aerodynamischen Bauteils sich in einem axialen Abstand (Dx) von einer Kreuzungszone zwischen dem profilierten Abschnitt (36) und dem Strukturarm (35) befindet, und dadurch, dass die Kreuzungszone entlang der Umfangsrichtung eine Dicke (e1) aufweist, die im Wesentlichen gleich das Dreifache des Frontbereichs des profilierten Abschnitts (36) beträgt.

10. Zwischengehäuse (22) nach einem der vorstehenden Ansprüche, **dadurch gekennzeichnet, dass** die Statorschaufel (34) eine zwischen ihrer Anströmkante (42) und ihrer Abströmkante (43) gemessene axiale Kreissehne (Cx) aufweist, und dadurch, dass der profilierte Abschnitt (36) eine zwischen der Anströmkante (51) des aerodynamischen Bauteils (33) und der Kreuzungszone gemessene axiale Länge gleich der axialen Kreissehne (Cx) aufweist.

11. Zwischengehäuse (22) nach einem der vorstehenden Ansprüche, **dadurch gekennzeichnet, dass** es durch Gießerei oder additive Fertigung hergestellt wird.

12. Ringförmiges Zwischengehäuse (22) eines Turbotriebwerks (1) mit Längsachse X, insbesondere für ein Luftfahrzeug, wobei es mindestens zum Teil dazu bestimmt ist, einen aerodynamischen Luftstrom zirkulieren zu lassen, wobei das Zwischengehäuse (22) Folgendes umfasst:
- einen radial internen ringförmigen Klemmring (31),
- einen radial externen ringförmigen Klemmring (32),
- mindestens eine Statorschaufel (34), die sich im Wesentlichen entlang einer radialen Achse Z erstreckt, wobei die Statorschaufel (34) ein Blatt (37) mit einer Anströmkante (42) und einer Abströmkante (43) umfasst, und
- mindestens ein aerodynamisches Bauteil (33), das aus einem Strukturarm (35) gebildet ist, der sich mindestens zum Teil radial zwischen dem radial internen ringförmigen Klemmring (31) und dem radial externen ringförmigen Klemmring (32) erstreckt,
**dadurch gekennzeichnet, dass** die Statorschaufel sich zwischen einer ersten Plattform (95) und einer zweiten Plattform (96) erstreckt und das aerodynamische Bauteil (33) eine Anströmkante (51) umfasst, die mit der Anströmkante (42) der Statorschaufel (34) in einer Ebene (P) ausgerichtet ist, die senkrecht zu der Längsachse X vorliegt, wobei die Anströmkante (51) des aerodynamischen Bauteils (33) durch einen profilierten Abschnitt (36) getragen wird, der stromaufwärts des Strukturarms (35), entlang der Zirkulationsrichtung des aerodynamischen Luftstroms, angeordnet ist, wobei der profilierte Abschnitt (36) und der Strukturarm (35) einteilig sind, und dadurch, dass das aerodynamische Bauteil (33) mit dem radial internen ringförmigen Klemmring (31) und dem radial externen ringförmigen Klemmring (32) einteilig ist, und dadurch, dass die erste Plattform (95) mit dem radial internen Klemmring (31) einteilig ist und die zweite Plattform (96) mit dem radial externen Klemmring (32) einteilig ist, wobei die erste und die zweite Plattform (95, 96) jede jeweils eine Vielzahl von Schlitzen (135, 135', 136, 136') von mit den Blättern (37) der Statorschaufeln (34), die um die Längsachse X herum regelmäßig verteilt sind, komplementärer Form umfassen, wobei jede Statorschaufel (34) ein radial internes Ende (38), das in einem ersten Schlitz (135, 135') aufgenommen ist, der der ersten Plattform (95) entspricht, und ein radial externes Ende umfasst, das in einem zweiten Schlitz (136, 136') aufgenommen ist, der der zweiten Plattform (96) entspricht.

13. Zwischengehäuse (22) nach dem vorstehenden Anspruch, **dadurch gekennzeichnet, dass** jedes des radial externen oder internen Endes mit einer Anschlagsplattform (137, 137') fest verbunden ist, die radial an der Außenseite einer ersten oder zweiten Plattform (95, 96) ruht, und das andere von jedem des radial internen oder externen Endes radial blockiert oder an der ersten oder zweiten Plattform befestigt ist.

14. Zwischengehäuse (22) nach dem vorstehenden Anspruch, **dadurch gekennzeichnet, dass** die Blockierung oder Befestigung durch eine Blockierungsvorrichtung (139) oder eine Schweißnaht hergestellt ist.

15. Doppelstrom-Turbotriebwerk (1) mit Längsachse X, insbesondere für ein Luftfahrzeug, umfassend:
- mindestens ein Gebläse (2), das einen Luftstrom erzeugt und mindestens eine ringförmige Reihe von Gebläseschaufeln (2b) umfasst, die durch eine Nabe (30) mit Längsachse X getragen werden,
- ein Trennungstülle (17), stromabwärts von der Reihe von Schaufeln des Gebläses (2b), die den Luftstrom in einen primären Strom, der in einer primären ringförmigen Vene (14) zirkuliert, und einen sekundären Strom trennt, der in einer sekundären ringförmigen Vene (15) zirkuliert,
- mindestens einen Kompressor (4, 5), der stromabwärts eines Eingangs der primären Vene angeordnet ist, die durch eine ringförmige Kante der Trennungstülle (17) gebildet wird und ringförmige Reihen von mobilen Schaufeln (4a) und von Gleichrichterschaufeln (4b) umfasst, und
- mindestens ein Zwischengehäuse (22) des Turbotriebwerks nach einem der vorstehenden Ansprüche, wobei das Zwischengehäuse (22) eine Vielzahl von Statorschaufeln (34) umfasst, die um die Längsachse X auf eine Weise verteilt sind, um den Luftstrom am Ausgang der letzten Reihe von mobilen Schaufeln (4a) des Kompressors gleichzurichten.

## Claims

1. An annular intermediate casing (22) for a turbomachine (1) of longitudinal axis X, in particular, for an aircraft, through which an aerodynamic air flow is intended to circulate at least in part, the intermediate casing (22) comprising:
- an annular radially inner shroud (31),
- an annular radially outer shroud (32),
- at least one stator vane (34) extending substantially along a radial axis Z, the stator vane (34) comprising a blade (37) with a leading edge (42) and a trailing edge (43), and
- at least one aerodynamic member (33) which is formed of a structural arm (35) extending radially at least in part between the radially inner shroud (31) and the radially outer shroud (32),
**characterised in that** the stator vane extends between a first platform (95) and a second platform (96) and the aerodynamic member (33) comprises a leading edge (51) which is aligned with the leading edge (42) of the stator vane (34) in a plane (P) perpendicular to the longitudinal axis X, the leading edge (51) of the aerodynamic member (33) being borne by a profiled portion (36) positioned upstream of the structural arm (35) in the direction of circulation of the aerodynamic air flow, the profiled portion (36) and the structural arm (35) being monobloc, and **in that** the aerodynamic member (33) is monobloc with the radially inner shroud (31) and the radially outer shroud (32), the intermediate casing (22) comprising at least two aerodynamic members (33) spaced along the circumferential direction about the longitudinal axis X and a straightening assembly which is added on between the two aerodynamic members (33) and which are distinct from the two aerodynamic members (33), the straightening assembly comprising the first platform (95), the second platform (96) and a plurality of stator vanes (34) extending radially between the first and second platforms (95, 96) and being distributed regularly along the circumferential direction, each leading edge (42) of the plurality of stator vanes (34) is aligned with the leading edge (51) of the aerodynamic member in the plane (P) perpendicular to the longitudinal axis X.

2. The intermediate casing (22) according to the preceding claim, **characterised in that** the profiled portion (36) extends radially between a radially inner platform (46) and a radially outer platform (47), the radially inner and radially outer platforms being respectively monobloc with the radially inner shroud (31) and the radially outer shroud (32), and **in that** the radially inner platform (46) has a radially inner surface (79) bearing a first layer (80) of abradable material.

3. The intermediate casing (22) according to the preceding claim, **characterised in that** the first platform (95) and the second platform (96) are added on and fixed to the radially inner shroud (31) and the radially outer shroud (32) respectively, the first platform (95) having a radially inner surface (117) bearing a second layer (118) of abradable material, the second layer of abradable material (118) being aligned along the circumferential direction with the first layer (80) of abradable material.

4. The intermediate casing (22) according to any one of the preceding claims, **characterised in that** the first platform (95) comprises a base (109) which is fixed to an annular range (88) of the radially inner shroud (31) with at least one fixing member (67) providing an axial fixation.

5. The intermediate casing (22) according to any one of the preceding claims, **characterised in that** the second platform (96) is fixed to a radial wall (25) of the radially outer shroud (32) which extends radially towards the outside from a radially outer surface (63) and via at least one fixing member.

6. The intermediate casing (22) according to the preceding claim, **characterised in that** the second platform (96) has tabs (102) each extending from its radially outer surface (103), each tab (102) being fixed to an axial leg (66) of the radial wall (25) with the fixing members (67) providing a radial fixation.

7. The intermediate casing (22) according to claim 6, **characterised in that** the second platform (96) comprises a radial attachment flange (130) extending radially towards the outside from its radially outer surface (103) and along the circumferential direction on its entire periphery, the radial attachment flange (130) being fixed to a lower branch (64) of the radial wall (25) that extends along the radial axis and with the fixing members (67) providing an axial fixation.

8. The intermediate casing (22) according to any one of the preceding claims, **characterised in that** the straightening assembly is monobloc.

9. The intermediate casing (22) according to any one of the preceding claims, **characterised in that** the leading edge (51) of the aerodynamic member is located at an axial distance (Dx) from a zone of intersection between the profiled portion (36) and the structural arm (35), and **in that** the zone of intersection has a thickness (e1) along the circumferential direction substantially equal to three times the master torque of the profiled portion (36).

10. The intermediate casing (22) according to any one of the preceding claims, **characterised in that** the stator vane (34) has an axial chord (Cx) measured between its leading edge (42) and its trailing edge (43) and **in that** the profiled portion (36) has an axial length measured between the leading edge (51) of the aerodynamic member (33) and the zone of intersection substantially equal to the axial chord (Cx).

11. The intermediate casing (22) according to any one of the preceding claims, **characterised in that** it is made by casting or additive manufacturing.

12. An annular intermediate casing (22) for a turbomachine (1) with a longitudinal axis X, in particular, for an aircraft, through which an aerodynamic air flow is intended to circulate at least in part, the intermediate casing (22) comprising:
- an annular radially inner shroud (31),
- an annular radially outer shroud (32),
- at least one stator vane (34) extending substantially along a radial axis Z, the stator vane (34) comprising a blade (37) with a leading edge (42) and a trailing edge (43), and
- at least one aerodynamic member (33) which is formed of a structural arm (35) extending radially at least in part between the radially inner shroud (31) and the radially outer shroud (32),
**characterised in that** the stator vane extends between a first platform (95) and a second platform (96) and the aerodynamic member (33) comprises a leading edge (51) which is aligned with the leading edge (42) of the stator vane (34) in a plane (P) perpendicular to the longitudinal axis X, the leading edge (51) of the aerodynamic member (33) being borne by a profiled portion (36) arranged upstream of the structural arm (35) along the direction of circulation of the aerodynamic air flow, the profiled portion (36) and the structural arm (35) being monobloc, and **in that** the aerodynamic member (33) is monobloc with the radially inner shroud (31) and the radially outer shroud (32) and **in that** the first platform (95) is monobloc with the radially inner shroud (31) and the second platform (96) is monobloc with the radially outer shroud (32), the first and second platforms (95, 96) each comprising respectively a plurality of slots (135, 135', 136, 136') of complementary shape with the blades (37) of the stator vanes (34) which are distributed regularly about the longitudinal axis X, each stator vane (34) comprising a radially inner end (38) which is received in a corresponding first slot (135, 135') of the first platform (95) and a radially outer end which is received in a corresponding second slot (136, 136') of the second platform (96).

13. The intermediate casing (22) according to the preceding claim, **characterised in that** each of the radially outer or inner ends is secured to an abutment platform (137, 137') lying radially towards the outside of a first or second platform (95, 96) and the other of each of the radially inner or outer ends radially opposite is locked or fixed to the first or second platform.

14. The intermediate casing (22) according to the preceding claim, **characterised in that** the locking or fixing is achieved by a locking device (139) or a weld.

15. A dual flow turbomachine (1) with a longitudinal axis X, in particular, for aircraft, comprising:
- at least one fan (2) generating an air flow and comprising at least one annular row of fan blades (2b) carried by a hub (30) of longitudinal axis X,
- a splitter nose (17), downstream of the row of fan blades (2b) separating the air flow into a primary flow circulating in an annular primary vein (14) and a secondary flow circulating in an annular secondary vein (15),
- at least one compressor (4, 5) arranged downstream of an inlet to the primary vein formed of an annular edge of the splitter nose (17) and comprising annular rows of movable vanes (4a) and guide vanes (4b), and
- at least one turbomachine intermediate casing (22) according to any one of the preceding claims, the intermediate casing (22) comprising a plurality of stator vanes (34) distributed around the longitudinal axis X so as to straighten the air flow leaving the last row of movable vanes (4a) of the compressor.
